Europäisches Patentamt

(19) European Patent Office

Office européen des brevets

(11) Publication number: **0 124 619**

**B1**

(12) **EUROPEAN PATENT SPECIFICATION**

(45) Date of publication of patent specification: **27.01.88**

(21) Application number: **83903416.2**

(22) Date of filing: **02.11.83**

(86) International application number:
**PCT/JP83/00395**

(87) International publication number:
**WO 84/01865 10.05.84 Gazette 84/12**

(51) Int. Cl.⁴: **H 02 P 5/34**

(54) **CONTROLLER FOR AC MOTOR.**

(30) Priority: **02.11.82 JP 192947/82**
**17.11.82 JP 201695/82**
**17.11.82 JP 201696/82**
**25.11.82 JP 206425/82**
**25.11.82 JP 206426/82**

(43) Date of publication of application:
**14.11.84 Bulletin 84/46**

(45) Publication of the grant of the patent:
**27.01.88 Bulletin 88/04**

(84) Designated Contracting States:
**DE FR GB**

(56) References cited:
**EP-A-0 051 478**
**JP-A-53 045 158**
**JP-A-55 120 378**
**JP-A-57 110 093**
**JP-A-57 151 290**
**JP-U-53 111 218**
**US-A-4 409 534**

**Denki Keisan, vol. 36, no. 10, August 1968
(Tokyo), Wakatsuki Akira "Turbine Hatsudenki
no Keisoku Kairo to Keiki", p. 208-209**

(73) Proprietor: **FANUC LTD**
**3580, Shibokusa Aza-Komanba Oshino-mura
Minamitsuru-gun Yamanashi 401-05 (JP)**

(72) Inventor: **FUJIOKA, Yoshiki**
**Green-Town 3-30 3-1293-10, Tatsuno
Higashi Yamato-shi Tokyo 189 (JP)**
Inventor: **HIROTA, Mitsuhiko**
**3-14-13, Ikejiri Setagaya-ku
Tokyo 154 (JP)**

(74) Representative: **Billington, Lawrence Emlyn
et al
HASELTINE LAKE & CO Hazlitt House
28 Southampton Buildings Chancery Lane
London WC2A 1AT (GB)**

## Description

This invention relates to an AC motor control apparatus.

The recent spread of microcomputers has made it possible to substitute a microcomputer for a variety of discrete circuits. This holds for the control circuit of an AC motor, the velocity control loop of which has already been placed under the control of a microcomputer.

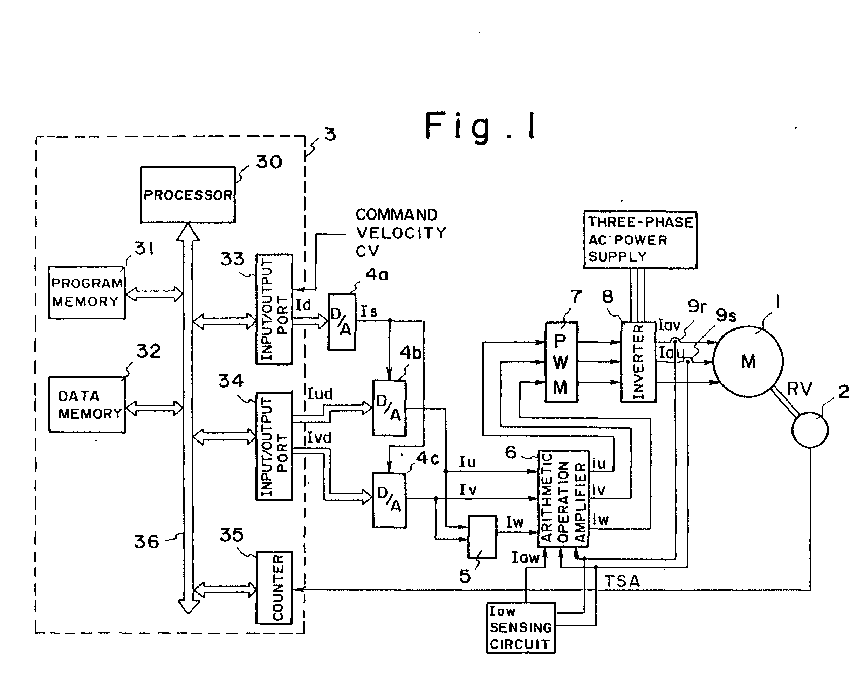

Fig. 1 is a block diagram of a conventional AC motor control circuit. In Fig. 1, numeral 1 denotes a three-phase AC motor such as one for rotating the spindle of a machine tool. Numeral 2 denotes a pulse generator for producing velocity pulses TSA in dependence upon rotation of the AC motor 1. Numeral 3 designates an arithmetic unit comprising a computer and constituting part of a control section for the motor 1. The arithmetic unit 3 senses the actual velocity RV of the AC motor 1 on the basis of the velocity pulses TSA from the pulse generator, and produces an amplitude command Id as well as U- and V-phase phase commands θud, θvd in dependence upon the difference between the actual velocity and a commanded velocity CV. The arithmetic unit 3 is composed of a processor 30 for performing processing a program, memory 31 storing a control program, a data memory 32 for storing various data, input/output ports 33, 34, a counter 35, and an address/data bus 36 interconnecting these components. The processor 30, in accordance with the control program in the program memory 31, reads via the bus 36 a value recorded in the counter 35, which counts the velocity pulses TSA, obtains the actual velocity RV of the AC motor 1 from the difference between the read value and the value read previously, calculates the amplitude command Id on the basis of the difference between the actual velocity and the commanded velocity CV issued by an external unit, and applies the amplitude command to the input/output port 33 through the bus 36. Further, in accordance with the control program, the processor 30 retrieves a phase conversion table in the data memory 32 on the basis of the value from the counter 35, reads the corresponding U- and V-phase phase commands θud and θvd, respectively, and applies these commands to the input/output port 34 via the bus 36. In order to deliver current commands Iud, Ivd in the form of U- and V-phase sinusoidal signals to which motor excitation frequency wt has been applied, the phase conversion table is stored digitally in the form of numerical values representing each of the crest values of the sinusoidal signals.

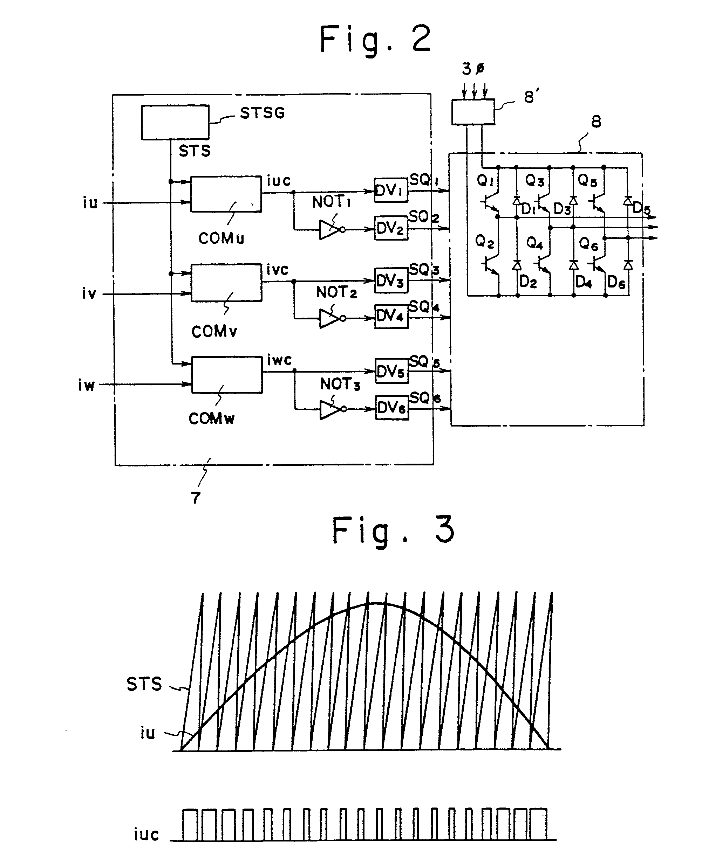

Numeral 4a denotes a digital/analog conversion signal (DA circuit) for converting the digital amplitude command Id into an analog amplitude command Is. Numerals 4b, 4c denote multiplying-type digital/analog conversion circuits for converting the respective U- and V-phase current commands Iud, Ivd into analog quantities and for multiplying these analog quantities by the analog amplitude command Is to produce analog U- and V-phase current commands Iu, Iv, respectively. Numeral 5 designates a W-phase current forming circuit for forming a W-phase current command Iw from the analog U- and V-phase current commands Iu, Iv. Numeral 6 represents an operational amplifier for obtaining the difference between actual phase currents and the commanded currents Iu, Iv, Iw in the respective phases. The operational amplifier 6 is composed of an operational amplifier for calculating the difference between the commanded currents Iu, Iv, Iw in the respective phases, and the actual phase currents Iau, Iav, Iaw, respectively, and an arithmetic unit 10 for producing a W-phase phase current Iaw by adding Iav and Iau, which are sensed by current transformers 9r, 9s. Numeral 7 denotes a pulse-width modulating circuit, and numeral 8 an inverter controlled by an output signal from the pulse-width modulating circuit for providing a DC voltage derived from an externally provided three-phase AC power supply and a rectifying circuit (a group of diodes and a capacitor) for rectifying the three-phase alternating current into a direct current. As shown in Fig. 2, the pulse-width modulating circuit 7 includes a sawtooth waveform generating circuit STSG for generating a sawtooth waveform STS, comparators COMu, COMv, COMw, NOT gates $NOT_1$ through $NOT_3$, and drivers $DV_1$ through $DV_6$. The inverter 8 includes six power transistors Q1 through Q6 and six diodes D1 through D6. The comparators COMu, COMv, COMw of the pulse-width modulating circuit 7 compare the sawtooth signal STS with the amplitudes of the three-phase AC signals iu, iv, iw, respectively, and produce a "1" output when the magnitude of STS is exceeded by iu, iv or iw, or a "0" output when the magnitude of STS is greater. Thus, with respect to iu, the comparator COMu produces the current command $i_uc$ shown in Fig. 3. More specifically, pulse-width modulated three-phase current commands iuc, ivc, iwc dependent upon the amplitudes of iu, iv, iw are produced. These current commands iuc, ivc, iws are then converted into drive signals SQ1 through SQ6 by the NOT gates $NOT_1$ through $NOT_3$ and drivers $DV_1$ through $DV_6$, whereby the on/off action of the power transistors Q1 through Q6 constituting the inverter 8 is controlled. Numeral 8' denotes a rectifying circuit for the abovementioned direct current feed.

Next, the operation of the arrangement shown in Fig. 1 will be described for a case where the AC motor 1 is rotating at the actual velocity RV.

The processor 30 of the arithmetic unit 3 reads the value in the counter 35, which counts the velocity pulses TSA, through the bus 36 to sense the actual velocity RV of the AC motor 1. Next, the processor 30 calculates the amplitude command Id on the basis of the difference between the commanded velocity CV and the sensed actual velocity, retrieves the phase conversion table from the memory 32, reads out the corresponding U- and V-phase current commands Iud, Ivd and, via the bus 36, applies the amplitude Id to the input/output port circuit 33 and the U- and V-phase current commands lud, lvd to the input/output port circuit 34. The amplitude command ld from the input/output port 33 is converted into an analog amplitude command ls by the digital/analog conversion circuit 4a, which command is then applied to the multiplying-type digital/analog conversion circuits 4b, 4c. Meanwhile, the U- and V-phase current commands lud, lvd are converted into analog quantities by the respective multiplying-type digital/analog conversion circuits 4b, 4c, which quantities are multiplied by the analog amplitude command ls to be converted into analog U- and V-phase current commands lu, lv. The U- and V-phase current commands lu, lv are applied to the W-phase current forming circuit 5, which produces the W-phase current lw. The W-phase current lw is applied to the operational amplifier 6 together with the U- and V-phase current commands lu, lv, respectively. The operational amplifier 6 receives the actual phase currents lau, lav from the converters 9r, 9s and forms the W-phase phase current law. The operational amplifier 6 also produces three-phase AC signals iu, iv, iw which are the differences between the three-phase current commands lu, lv, lw and respective ones of the actual phase currents lau, lav, law. The three-phase AC signals iu, iv, iw indicative of these differences are applied to the respective comparators COMu, COMv, COMw of the pulse-width modulating circuit 7. The comparators COMu, COMv, COMw compare the amplitudes of the three-phase AC signals iu, iv, iw with the amplitude of the sawtooth STS, and deliver as outputs three-phase current commands iuc, ivc, iwc produced by way of pulse width modulation. The outputs from the comparators are supplied to the NOT gates $NOT_1$ through $NOT_3$ and to the drivers $DV_1$ through $DV_6$, which generate the inverter drive signals SQ1 through SQ6. The inverter drive signals SQ1 through SQ6 are applied to the bases of the power transistors Q1 through Q6, respectively, in the inverter 8 and control the on/off action of the power transistors Q1 through Q6 for supplying three-phase current to the AC motor 1. The AC motor 1 will thenceforth be controlled in a similar mode until the motor eventually rotates at the commanded velocity.

With the AC motor control apparatus having this conventional construction, the current loop requires a quick response. Therefore, the DA conversion circuits 4a through 4c, the operational amplifier 6 and the pulse-width modulating circuit 7, which construct the current loop, inevitably are composed of discrete circuits and are difficult to convert into digital form. In consequence, the apparatus includes a large number of component parts and is possessed of complicated circuitry.

Moreover, owing to the storage time of the power transistors Q1 through Q6 in the inverter 8, there is the danger that the upper and lower sides of the inverter will be short-circuited by the upper transistor Q1 and lower transistor Q2 turning on simultaneously. Accordingly, it is desirable that the drive signals SQ1, SQ2 be provided with a dead zone. This is difficult to achieve in digital fashion.

In addition, less current ripple is produced if the pulse-width modulating circuit compares triangular waves rather than sawtooth waveforms. The fact that the triangular wave comparison must be realized digitally further complicates the digitalisation of the apparatus.

According to the present invention there is provided an AC motor control apparatus for causing an actual velocity of an AC motor to follow up a commanded velocity, comprising first digital arithmetic means for calculating an amplitude command based on a difference between the commanded velocity and the actual velocity of the AC motor and for delivering said amplitude command and a current command in at least one phase as outputs, a current sensing circuit for sensing actual phase currents, means for calculating a pulse width modulated signal in each phase from the current command and the actual phase current of the AC motor, and an inverter for driving said AC motor in accordance with the pulse width modulated signals,

characterised by having an analog/digital conversion circuit for subjecting the actual phase currents of said AC motor to an analog-to-digital conversion, second digital arithmetic means connected to said first arithmetic means by a bus for calculating a pulse width command in each phase in dependence upon amplitude and phase commands supplied by said first arithmetic means and upon the actual phase currents of the AC motor, and a timer for producing as an output a pulse-width modulated signal in each phase on the basis of the pulse width command supplied by said second arithmetic means, said second arithmetic means being arranged for calculating ON time in the inverter in each phase dependent upon a comparison between a reference triangular signal corresponding to a level to be modulated and a phase AC signal corresponding to a level of a respective phase control signal, and for calculating OFF time from the start of said reference triangular signal based on the period of said reference triangular signal and said ON time, the timer comprising in each phase first counter means set to said OFF time for counting said set OFF time, and second counter means set to said ON time for counting said set ON time after said OFF time is counted, thereby to produce as an output said pulse-width modulated signal in each phase.

An embodiment of the present invention may provide an AC motor control apparatus in which a current control loop can be put into digital form with facility.

There may be provided an embodiment which can be simplified by putting the current control loop into digital form, and in which an inverter drive signal may be provided with a dead zone in digital fashion.

An embodiment may be provided in which a current control loop is capable of being converted into digital form, and in which an arrangement for sensing phase currents can be simplified.

A bus control circuit may be provided between the first arithmetic means and the second arithmetic means for severing a bus on the side of the first arithmetic means from a bus on the side of the second arithmetic means, the analog/digital conversion circuit being connected to the bus on the side of the second arithmetic means, and the bus on the side of the first arithmetic means being severed from the bus on the side of the second arithmetic means by the bus control circuit, whereupon the second arithmetic means reads in the actual phase currents from the analog/digital conversion circuit.

A dead zone generating circuit may apply a dead zone to the pulse-width modulated signals of the timer to produce inverter drive signals, the dead zone generating circuit including an integrating circuit for integrating the pulse-width modulated signals, and a hysteresis circuit having different slice levels with respect to an output from the integrating circuit, the slice level at rise time being different from the slice level at decay time.

The current sensing circuit for sensing the phase currents of the AC motor may comprise a current sensor for sensing currents in at least two phases, an analog switch provided for each of the phases in which current is sensed, and a changeover circuit for changing over the analog switches in response to a control signal from the second arithmetic means, the sensed currents being successively applied to an analog/digital converter via the analog switches.

The entirety of the current control loop of the AC motor control apparatus can be put into digital form, and second arithmetic means are employed. As a result, advantages such as a reduction in the number of component parts and lower cost may be obtained. Moreover, a current loop requiring quick response can be put into digital form without increasing the load on the first arithmetic means.

Furthermore, by providing the dead zone generating circuit, a dead zone may be applied to the drive signals for driving power transistors for the inverter. As a result, both processors do not perform complicated calculations for applying the dead zone. Hence, there is no deterioration in the quick response of the current loop, and even the current loop can be put into digital form. Since pulse width modulation based on triangular wave comparison is capable of being carried out digitally, construction is simplified and inclusion of ripple in the current that flows into the AC motor is reduced.

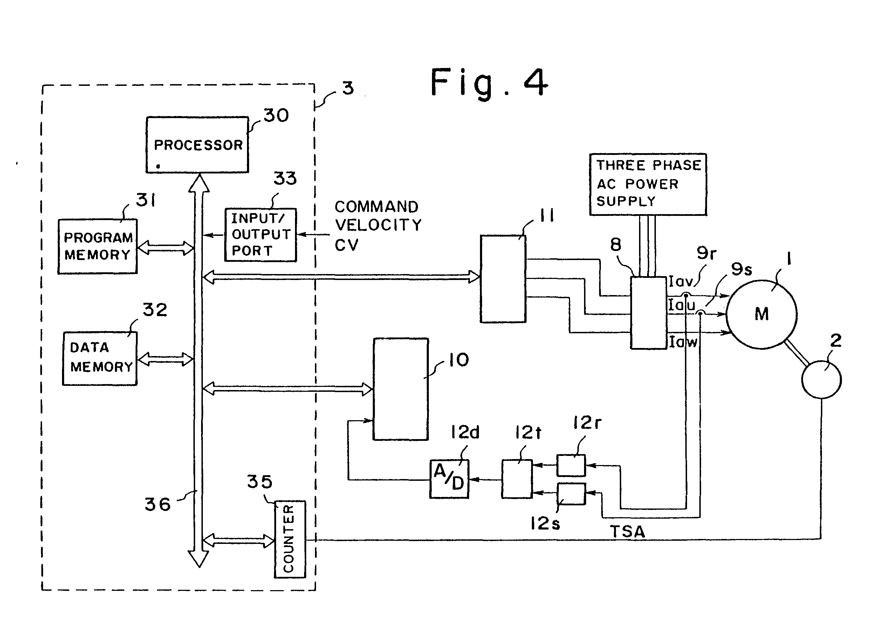

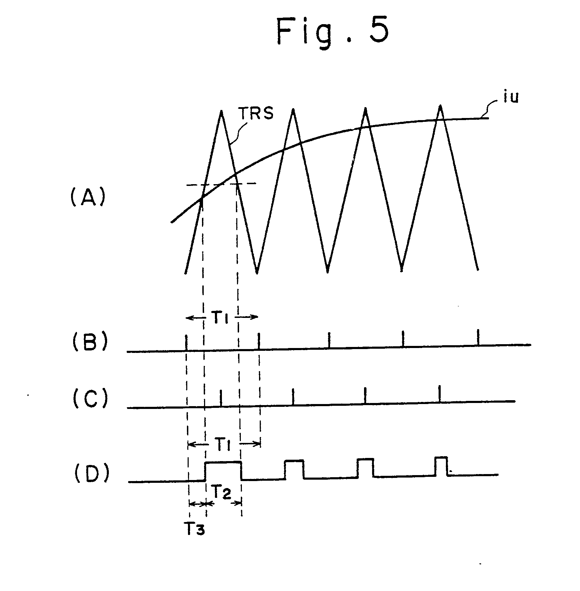

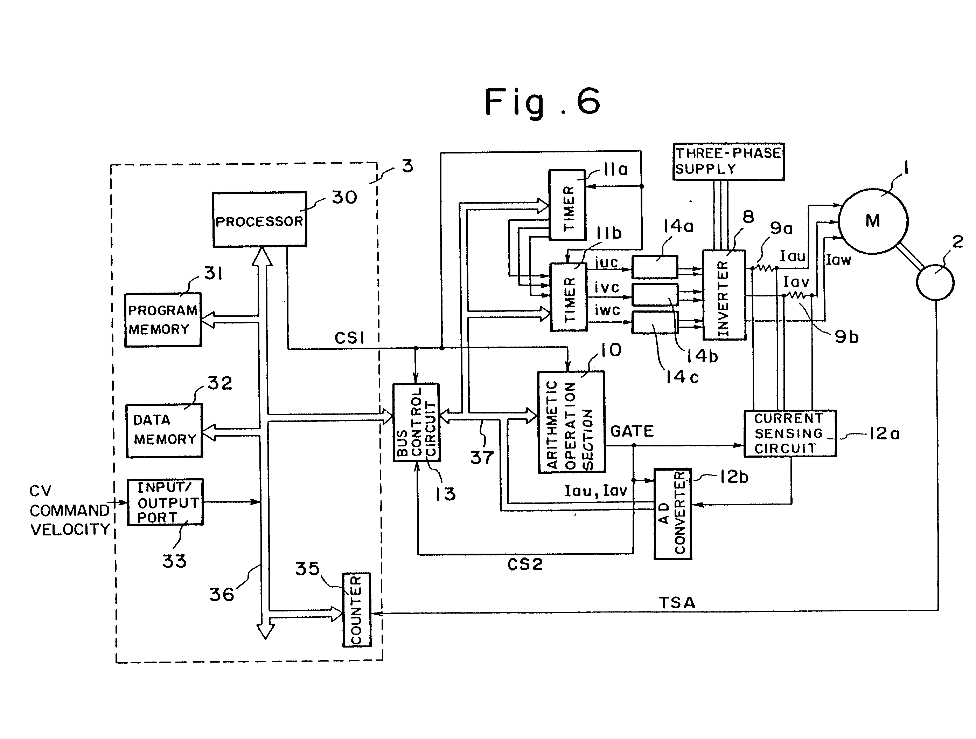

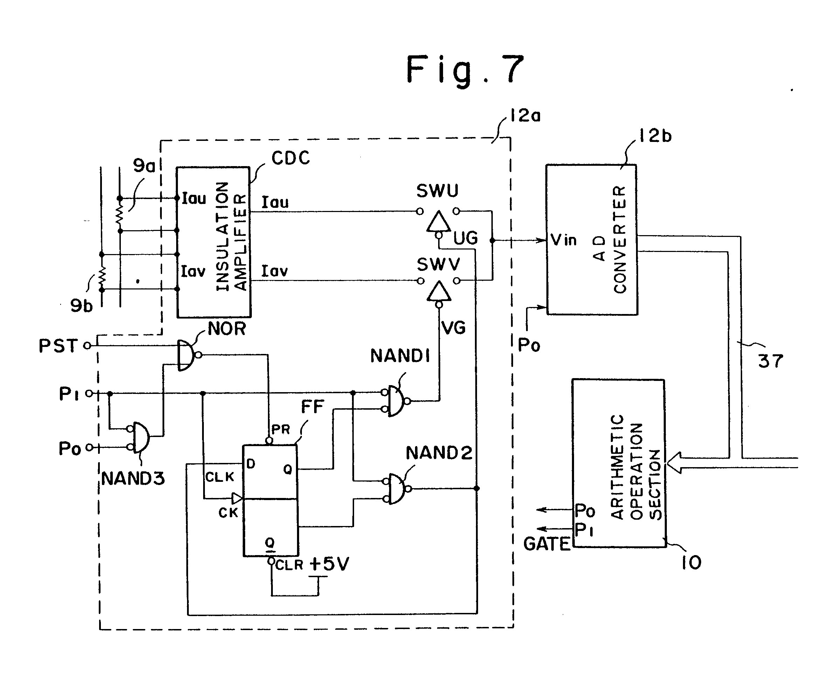

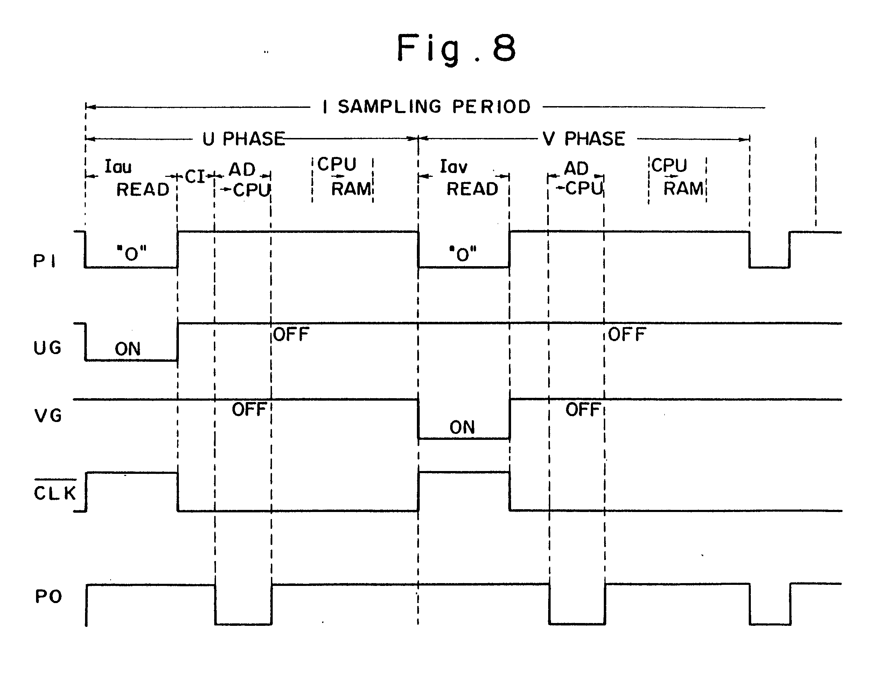

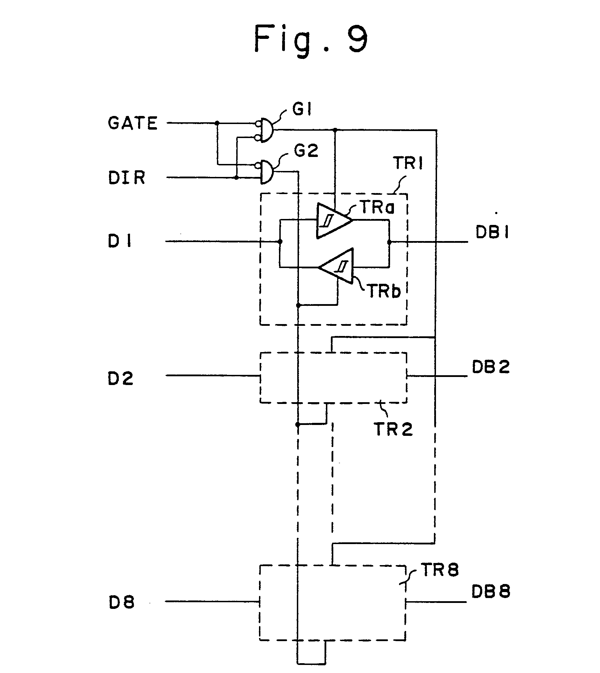

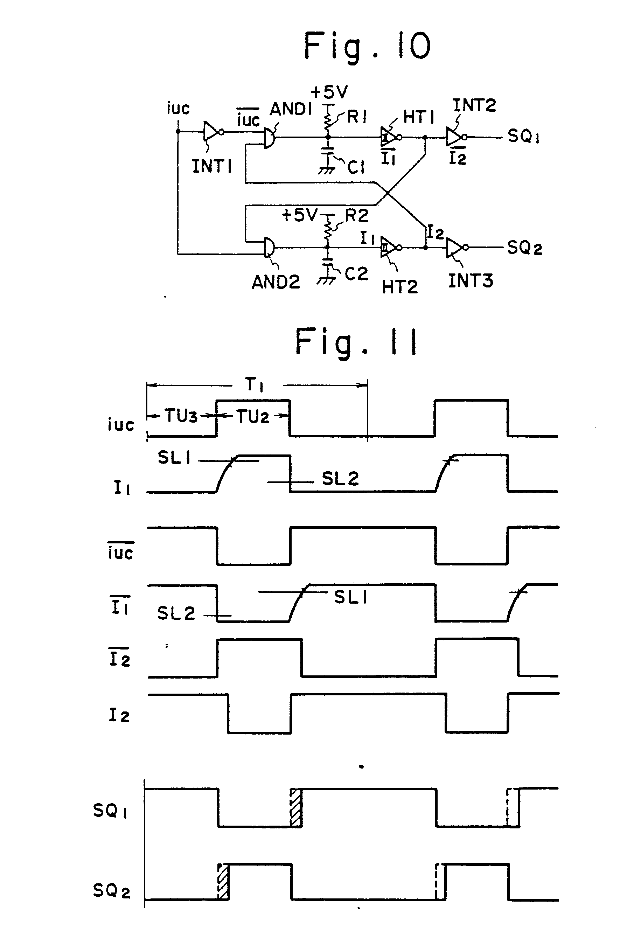

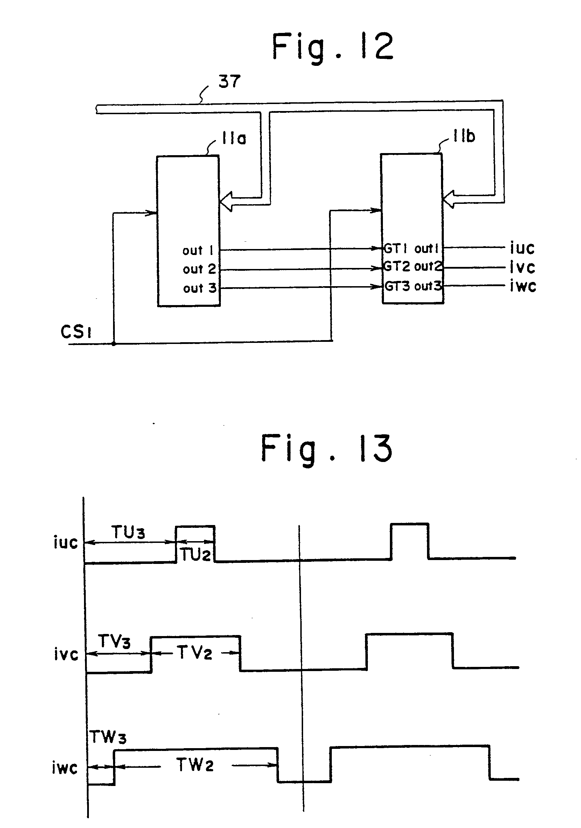

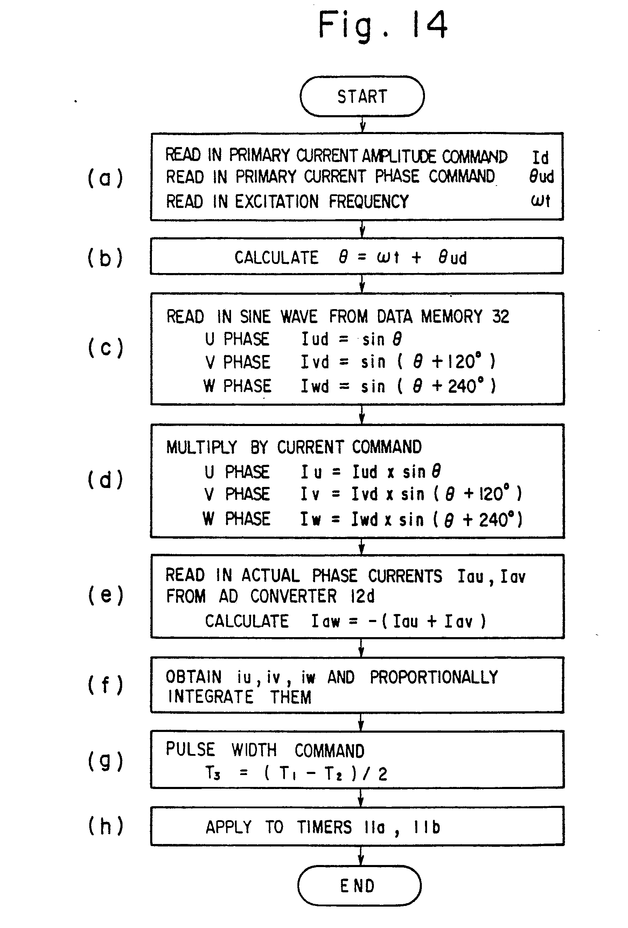

Fig. 1 is a block diagram of a prior-art AC motor control circuit, Fig. 2 is a view showing the construction of a principal portion of the arrangement shown in Fig. 1, Fig. 3 is a view for describing the operation of the arrangement shown in Fig. 2, Fig. 4 is a block diagram illustrating an embodiment of the present invention, Fig. 5 is a view for describing the operation of a pulse-width modulating circuit which relies upon triangular wave comparison, Fig. 6 is a block diagram illustrating another embodiment of the present invention, Fig. 7 is a circuit diagram illustrating the construction of a current sensing circuit in Fig. 6, Fig. 8 is a waveform diagram illustrating waveforms associated with various portions of the current sensing circuit of Fig. 6, Fig. 9 is a view showing the construction of a bus control circuit shown in Fig. 6, Fig. 10 is a circuit diagram of a dead zone generating circuit shown in Fig. 6, Fig. 11 is a waveform diagram illustrating waveforms associated with various portions of the dead zone generating circuit shown in Fig. 10, Fig. 12 is a view showing the construction of a timer circuit in the arrangement of Fig. 6, Fig. 13 is a waveform diagram showing the outputs of the timer illustrated in Fig. 12, and Fig. 14 is a flowchart.

A detailed description will now be had with reference to the accompanying drawings to clarify the exemplary embodiments of the present invention.

Fig. 4 is a block diagram showing an embodiment of the present invention, in which portions similar to those shown in Fig. 1 are designated by like reference characters. In Fig. 4, numeral 10 denotes an arithmetic unit coupled directly to the bus 36 of the processor 30 via a bus control circuit, described below, for performing processing in accordance with commands from the processor 30. Numeral 11 denotes a programmable interval timer (hereafter referred to as a timer) for producing pulse-width modulated signals in accordance with a pulse width command signal. Numerals 12r, 12s denote current sensing circuits for amplifying the phase currents Iav, Iau sensed by the current transformers 9r, 9s, respectively. Numeral 12t denotes a mixing circuit for delivering the phase currents Iau, Iav in a time-sharing manner. Numeral 12d designates an analog/digital conversion circuit (hereafter referred to as an AD converter) for converting the analog phase currents Iav, Iau from the mixing circuit 12t into digital values, which are then applied to the arithmetic unit 10.

According to the arrangement of the present embodiment, the operations of the DA converters 4a, 4b, 4c, the W-phase current forming circuit 5, the operational amplifier 6 and the pulse-width modulating circuit 7 of the conventional arrangement shown in Fig. 1 are implemented by the arithmetic unit 10.

The operation of the arrangement embodied in Fig. 4 will now be described. When the processor 30 of the arithmetic unit 3 calculates the amplitude command Id and retrieves the U-phase current command Iud in the manner described above, the amplitude command Id, the U-phase current command Iud and the commanded velocity CV are delivered to the arithmetic unit 10 through the bus 36. The arithmetic unit 10 executes the following processing based on a calculation program stored in an internal memory thereof:

(1) The V- and W-phase current commands Ivd, Iwd, respectively, are calculated from the input U-phase current command Iud (current command calculation step).

The commanded velocity CV is given. Therefore, since the period of the sinusoidal signals is known, the V- and W-phase current commands lvd, lwd are obtained if the U-phase current command is calculated using values delayed in phase by 120° and 240°.

(2) The U-, V- and W-phase current commands lud, lvd, lwd are multiplied by the input amplitude command Id to calculate the current commands Iu, Iv, Iw in the respective phases (phase current command calculation step).

(3) The actual phase currents Iau, Iav are read from the AD converter 12d to calculate the W-phase actual current Iaw (actual phase current calculation step).

(4) The differences are computed between the current commands Iu, Iv, Iw of the respective phases and the actual phase currents Iau, Iav, Iaw, respectively, whereby three-phase AC signals iu, iv, iw are obtained (three-phase alternating current calculation step).

(5) The three-phase AC signals iu, iv, iw obtained are proportionally integrated (proportional integration step).

(6) Pulse width command signals are calculated from these three-phase AC signals iu, iv, iw (pulse width command calculation step).

The foregoing will now be described with reference to Fig. 5. Let the period of the triangular signal TRS shown in Fig. 5(A) be represented by T1, as shown in Fig. 5(B), and let the midpoint of the period T1 serve as a sampling pulse [Fig. 5(C)]. A value T2 of pulse width (ON time) is calculated, which value corresponds to a value iud of the AC signal iu that prevails at generation of the sampling pulse. This is obtained from the calculation $k \cdot (iu_{max} - iud)$.

Here, $iu_{max}$ represents a maximum set value of the AC signal, and k is a constant. Next, a time (OFF time) T3 is calculated from the periodic pulses by performing the following operation:

$$T3 = (T1 - T2)/2$$

The V- and W-phase AC signals iv, iw are calculated in a like manner. These calculations are performed every period of the triangular waves to produce pulse width command signals TU2, TU3.

(7) These pulse width command signals TU2, TU3, TV2, TV3, TW2, TW3 in the respective phases are applied to the processor 30 through the bus 36.

Next, the processor 30 applies the pulse width command signals TU2 through TW3 to the timer 11 via the bus 36. The timer 11 is composed of two timers per phase. After the first timer times the command signal TU3, the second timer times the command signal TU2. Therefore, as shown in Fig. 5(D), the second timer produces the pulse-width modulated signal iuc (Fig. 3). The signal is OFF for a time T3 following the periodic pulse, and is ON for a time T2 upon passage of the time T3. The pulse-width modulated signals ivc, iwc in the V and W phases, respectively, are produced in a similar manner. These pulse-width modulated signals iuc, ivc, iwc are applied to the inverter 8 to drive the motor 1.

It should be noted that the above-described arithmetic unit is a well-known signal processor (e.g, the µPD7720 manufactured by Intel Corp.). Therefore, since signals cannot be transferred to other circuitry without the intervention of the processor 30, the arrangement is such that the pulse width commands are applied to the timer 11 through the processor 30. However, the invention is not limited to this arrangement.

Fig. 6 is a block diagram illustrating another embodiment of the present invention, in which portions similar to those shown in Figs. 1 and 4 are denoted by like reference characters. Numeral 10 denotes an arithmetic unit coupled directly to the bus 36 of the processor 30 via a bus control circuit, described below, for performing processing in accordance with commands from the processor 30. Numerals 11a, 11b denote programmable interval timers (hereafter referred to as timers) for producing pulse-width modulated signals in accordance with pulse width command signals. Numeral 12a denotes a current sensing circuit which includes an isolation amplifier for amplifying the phase currents Iav, Iau sensed by current sensors 9a, 9b each of which comprises a resistor, and a mixing circuit for delivering the phase currents Iav, Iau in a time-sharing manner. Numeral 12b designates an analog/digital conversion circuit (hereafter referred to as an AD converter) for converting the analog phase currents Iav, Iau from the mixing circuit of the current sensing circuit 12a into digital values, which are then applied to the arithmetic unit 10. Fig. 7 illustrates the details of the AD converter. The arrangement of Fig. 7 is composed of an isolation amplifier CDC for amplifying the phase currents Iav, Iau sensed by the current sensors 9a, 9b, respectively, a pair of analog switches SWU, SWV for introducing the amplified phase currents Iau, Iav, which are the outputs of the isolation amplifier CDC, to the AD converter 12b in a time-sharing manner, a flip-flop FF constituting a switching circuit for controlling the switching of the analog switches SWU, SWV, NAND gates NAND1, NAND2 and NAND3, and a NOR gate NOR. Operation will be described with reference to Fig. 8. When a GATE signal provided by a terminal P1 of the arithmetic unit 10 attains a low level ("0"), the NAND gates NAND1, NAND2 open to deliver the Q, Q̄ outputs of the flip-flop FF as signals VG, UG, respectively, with the initial states of the Q, Q̄ outputs being "1". More specifically, since the input of the flip-flop FF is the GATE signal, which serves as a clock signal, the flip-flop changes state at the negative-going transition of the GATE signal when the signal is at the low level ("0"), so that the Q output goes to "1" and the Q̄ output goes to "0". The NAND gates NAND1, NAND2 therefore deliver "1", "0" outputs, respectively. Since the analog switches SWU, SWV turn on when the signals input thereto are at the low level ("0"), the analog switch SWU is turned on by the low-level signal UG to send the

phase current Iau to the AD converter 12b. When the GATE signal returns to the high level ("1"), the outputs of both NAND gates NAND1, NAND2 attain the high level "1", so that the analog switch SWU is turned off. As a result, the phase current Iau is read into the AD converter 12b only during the time that the GATE signal is at the low level, with the AD converter 12b converting the phase current Iau from an analog quantity into a digital quantity. There is provided a change inhibit interval CI for the analog switches so that a phase current will not be reapplied to the AD converter during the conversion period. Thereafter, when a control signal provided by a terminal Po of the arithmetic unit decays (attains the low level "0"), the phase current Iau, converted into digital form, is transferred from the AD converter 12b to the arithmetic unit 10 via the bus 37. The arithmetic unit 10 stores the phase current Iau in an internally located random-access memory (RAM). Next, when the GATE signal again attains the low level ("0"), the flip-flop FF changes state, the $Q$, $\overline{Q}$ outputs thereof go to "0", "1", respectively, and the outputs VG, UG of the NAND gates NAND1, NAND2 go to "0", "1", respectively. Consequently, the analog switch SWV is turned on, so that the phase current Iav is delivered to the AD converter 12b. When the GATE signal returns to the high level ("1"), the outputs of both NAND gates NAND1, NAND2 attain the high level "1", so that the analog switch SWV is turned off. As a result, the phase current Iav is read into the AD converter 12b only during the time that the GATE signal is at the low level, with the AD converter 12b converting the phase current Iav from an analog quantity into a digital quantity. Thereafter, as in the case of the phase current Iau, the change inhibit interval CI is provided, the phase current Iav from the AD converter 12b is transferred to the arithmetic unit 10 via the bus 37, and the arithmetic unit 10 stores the phase current Iav in the internally located RAM. Next, the arithmetic unit 10 sends both the GATE signal and control signal at the terminals P1, Po to the low level, whereby the NAND gate NAND3 issues a high-level output, sending the output of the NOR gate NOR to the low level. The NOR gate output is applied to the preset terminal PR of the flip-flop FF, thereby placing the flip-flop FF in the preset state.

Thus, the arithmetic unit 10 obtains the phase currents Iau, Iav when necessary, and the digital values of the two-phase currents Iau, Iav are obtained by a single AD converter.

Returning to Fig. 6, numeral 13 denotes a bus control circuit which, in response to a command, connects and disconnects the bus 36 on the side of the processor 30 of arithmetic unit 3, and the bus 37 on the side of the arithmetic unit 10. As shown in Fig. 9, the bus control circuit 13 is composed of gate circuits G1, G2, and bidirectional bus transceivers TR1 through TR8 corresponding to the lines of the buses 36, 37. The bidirectional bus transceivers TR1 through TR8 are provided for interconnecting lines D1 through D8 of the bus 36 on the side of the processor 30 and respective ones of lines DB1 through DB8 of the bus 37 on the side of the arithmetic unit 10. Each bus transceiver has a pair of transceivers TRa, TRb. Each bidirectional bus transceiver is controlled by output signals from the gate circuits G1, G2. When the gate signal GATE is at the low level ("0"), one of the transceivers TRa, TRb is placed in a high impedance mode, depending upon the level "1" or "0") of a direction indicating signal DIR, whereby a transfer becomes possible in a direction decided by the transceiver which is not placed in the high impedance mode. For example, if the direction indicating signal DIR is at the low level ("0"), then the output of the gate circuit G1 will go to the high level ("1"), the output of the gate circuit G2 will go to the low level ("0"), and the transceiver TRb will be placed in the high impedance mode. Therefore, a transfer by the transceiver TRa becomes possible from left to right in the Figure, i.e., from the processor 30 to the arithmetic unit 10. On the other hand, if the direction indicating signal DIR is at the level ("1"), a transfer becomes possible from the arithmetic unit 10 to the processor 30 in similar fashion. When the gate signal GATE is sent to the high level ("1"), the outputs of both gate circuits G1, G2 go to the low level ("0"), so that both of the transceivers TRa, TRb attain the high impedance mode to sever the lines D1 through D8 of the bus 36 from the respective lines DB1 through DB8. Then, utilizing the bus 36, the processor 30 performs an exchange of signals with the program memory, etc., connected to the bus 36, and the arithmetic unit 10 utilizes the bus 37 to perform, independently, an exchange of signals with the AD converter 12d connected to the bus 37.

Returning to Fig. 6, numerals 14a, 14b, 14c denote dead zone generating circuits for applying a dead zone with respect to each of the PWM signals iuc, ivc, iwc from the timer 11b. Depending upon the carrier charging times of the power transistors Q1 through Q6 of the inverter 8 (Fig. 2), there are occasions where the power transistors (e.g., Q1 and Q2) that are disposed one above the other are both turned on at the instant of drive. Accordingly, the dead zone generating circuits provide an interval during which the base signals of the upper and lower transistors are both turned off, thereby to prevent a short circuit. As shown in Fig. 10, the dead zone generating circuit is constituted by an inverter circuit INT1 for inverting the PWM signal iuc, AND gates AND2, AND1 for the PWM signal iuc, a first integrating circuit composed of a first resistor R1 and a first capacitor C1 for integrating the PWM signal iuc, which has been inverted, a second integrating circuit composed of a second resistor R2 and a second capacitor C1 for integrating the PWM signal iuc, signal inverting-type hysteresis circuits HT1, HT2 connected to the respective integrating circuits, and inverter circuits INT2, INT3.

The operation of the circuit shown in Fig. 10 will now be described on the basis of the various waveforms of Fig. 11. The PWM signal iuc is applied as an input to the second integrating circuit via the AND gate AND2, and the PWM signal iuc, which has been inverted by the inverter circuit IN, is applied as an input to the first integrating circuit through the AND gate AND1. The values of the capacitors and resistors are determined in such a manner that each integrating circuit will possess a time constant during rise time but not during fall time. Accordingly, at the leading edge of the PWM signal iuc, the second integrating circuit generates a gradually rising integrated output $I_1$ and the first integrating circuit generates a suddenly decaying integrated output $\overline{I}_1$. At the trailing edge of the PWM signal iuc, the second integrating circuit generates a suddenly decaying integrated output $I_1$ and the first integrating circuit generates a gradually rising integrated output $\overline{I}_1$. These integrated outputs $I_1, \overline{I}_1$ are applied to the respective hysteresis circuits HT1, HT2. The hysteresis circuits HT1, HT2 are constructed so as to have a leading edge slice level SL1 and a trailing edge slice level SL1 which differ from each other. The leading edge slice level SL1 is set high, and the trailing edge level SL2 is set low. The hysteresis circuits HT1, HT2 therefore generate respective outputs $I_2$, $\overline{I}_2$, which are inverted by the inverter circuits INT2 INT3 to be delivered as the inverter drive signals SQ1, SQ2. More specifically, the inverter drive signal SQ1 is at the low level ("0") for a period of time lengthened by the shaded portion, whereas the inverter drive signal SQ2 is at the high level ("1") for a period of time shortened by the shaded portion. The outputs of the hysteresis circuits HT1, HT2 are applied as gate control inputs to the AND gates AND2, AND1, respectively. Thus, a so-called latch circuit configuration is adopted. As a result, useless noise components can be removed to prevent the inverter drive signals SQ1, SQ2 from both attaining the high level ("1") simultaneously due to noise.

Since a dead zone indicated by the shaded portion is thus provided, the transistors Q1, Q2, by way of example, of the inverter 8 (Fig. 2) will not be turned on or off simultaneously. Rather, an interval of time is interposed between the on/off operation of the two transistors. Even though the transistors have charging times, therefore, a short circuit will not occur by transistors Q2 (or Q1) turning on before transistor Q1 (or Q2) has turned off. The foregoing holds for the V- and W-phase PWM signals ivc, iwc as well, and circuits of the same construction are provided for these signals, as shown in Fig. 6.

According to these arrangements embodying the present invention, the operations of the DA converters 4a, 4b, 4c, the W-phase current forming circuit 5, the operational amplifier 6 and the pulse-width modulating circuit 7 of the conventional arrangement shown in Fig. 1, are implemented by the arithmetic unit 10 and the timers 11a, 11b.

The operation of the embodiment illustrated in Fig. 6 will now be described in conjunction with the flowchart shown in Fig. 14.

First, as in the aforementioned conventional apparatus and the above-described first embodiment, the processor 30 of the arithmetic unit 3 reads in a primary current amplitude command Id, a primary current phase command θud, and the excitation frequency ωt (step a) and, in step b, performs the operation $θ=ωt+θud$. Thereafter, the amplitude command Id, U-phase current command Ud and commanded velocity CV are delivered to the arithmetic unit 10 via the bus 36, bus control circuit 13 and bus 37. The arithmetic unit 10 executes the following processing on the basis of a calculation program stored in an internal memory thereof.

(1) The V- and W-phase current commands Vd, Wd, respectively, are calculated from the input U-phase current command Ud (current command calculation step) (step c).

The commanded velocity CV is given. Therefore, since the period of the sinusoidal signals is known, the V- and W-phase current commands Vd, Wd are obtained if the U-phase current command is calculated using values delayed in phase by 120° and 240°.

(2) The U-, V- and W-phase current commands Iud, Ivd, Iwd are multiplied by the input amplitude command Id to calculate the current commands Iu, Iv, Iw in the respective phases (phase current command calculation step) (step d).

(3) the arithmetic unit 10 produces the gate signal GATE to place each bus transceiver of the bus control circuit 13 in the high impedance mode, whereby the buses 36, 37 are disconnected from each other. The current sensing circuit 12a delivers the actual phase currents Iau, Iav to the AD converter 12d in alternating fashion, with the AD converter 12d applying the digital values of the actual phase currents Iau, Iav to the arithmetic unit 10 via the bus 37. The arithmetic unit 10, in accordance with well-known calculation formulae, calculates the actual phase current Iaw in the W phase from the actual phase currents Iau, Iav (actual phase current calculation step).

(4) The differences are computed between the current commands Iu, Iv, Iw of the respective phases and the actual phase currents Iau, Iav, Iaw, respectively, whereby three-phase AC signals iu, iv, iw are obtained (three-phase alternating current calculation step) (step d).

(5) The three-phase AC signals iu, iv, iw obtained are proportionally integrated (proportional integration step) (step f).

(6) Pulse width command signals are calculated from these three-phase AC signals iu, iv, iw (pulse width command calculation step).

The foregoing will now be described with reference to Fig. 5. Let the period of the triangular signal TRS shown in Fig. 5(A) be represented by T1, as shown in Fig. 5(B), and let the midpoint of the period T1 serve as a sampling pulse [Fig. 5(C)]. A value T2 of pulse width (ON time) is calculated, which value corresponds to a value iud of the AC signal iu that prevails at generation of the sampling pulse. This is obtained from the calculation $k\cdot(iu_{max}-iud)$.

Here, $iu_{max}$ represents a maximum set value of the AC signal, and k is a constant. Next, a time (OFF time) T3 is calculated from the periodic pulses by performing the following operation:

$$T3=(T1-T2)/2$$

The V- and W-phase AC signals iv, iw are calculated in a like manner. These calculations are performed every period of the triangular waves to produce pulse width command signals T2, T3 (step g).

(7) These pulse width command signals TU2, TU3, TV2, TV3, TW2, TW3 in the respective phases are applied to the processor 30 through the bus 37, bus control circuit 13 and bus 36.

With the foregoing the operation of the arithmetic unit 10 ends. Next, the processor 30 provides the timers 11a, 11b with the pulse width command signals TU2 through TW3 via the bus 36, bus control circuit 13 and bus 37. The timers 11a, 11b include timers for each phase. After the command signal TU3 is timed by the first timer 11a, the second timer 11b times the command signal TU2. This will be described on the basis of the block diagram of Fig. 12 showing the details of the timers 11a, 11b. The pulse width command signals TU2, TU3, TV2, TV3, TW2, TW3 are received via the bus 37. In response to a control signal CS1 from the processor 30, the pulse width command signals TU3, TV3, TW3 are set in the timer 11a, and the pulse width command signals TU2, TV2, TW3 are set in the timer 11b. Clock pulses, not shown, are applied and are counted by the timer 11a. In the embodiment of Fig. 12, the timer 11a applies an output out3 to a gate terminal GT3 of the timer 11b when the period of time TW3 expires, whereby the timer 11b begins timing the period of time TW2. Likewise, when the time periods TV3, TU3 are counted, outputs out2, out1 are applied to respective gate terminals GT2, GT1 of the timer 11b, whereby the timer 11b begins timing the time periods TV2, TU2. The timer 11b is reset when it completes the timing of each one of the time periods TW2, TU2, TV2, with the timer 11b issuing a high-level ("1") output for the duration of the timed period. Accordingly, as shown in Fig. 13, pulse-width modulated signals iuc, ivc, iwc are produced in the respective phases.

These pulse-width modulated signals iuc, ivc, iwc are converted into the pulse-width modulated signals SQ1 through SQ6 having the dead zone, this being performed by the dead zone generating circuits 14a, 14b, 14c of the respective phases. The signals SQ1 through SQ6 are then applied to the respective power transistors Q1 through Q6 of the inverter 8, whereby a drive current is applied to the AC motor 1. The transfer of the amplitude command Id and the like from the processor 30 to the arithmetic unit 10, the calculation of the pulse width command signals in the arithmetic unit 10, and transfer of the pulse width command signals from the arithmetic unit 10 to the processor 30, and the transfer of the pulse width command signals from the processor 30 to the timers 11a,

11b, are carried out periodically. Accordingly, the motor 1 is controlled without a delay.

It should be noted that the above-described arithmetic unit is a well-known signal processor (e.g., the µPD7720 manufactured by Intel Corp.). Therefore, since signals cannot be transferred to other circuitry without the intervention of the processor 30, the arrangement is such that the pulse width commands are applied to the timer 11 through the processor 30. However, the invention is not limited to this arrangement.

According to the embodiments of the present invention as set forth above, the entirety of a control current loop in an AC motor control apparatus can be put into digital form and an arithmetic unit on a single chip is employed as second arithmetic means. As a result, the number of component parts can be reduced and the AC motor control apparatus can be lowered in cost. The AC motor control apparatus of the present invention is suitable not only for use as a general-purpose AC motor control apparatus, but also for use as a control apparatus of an AC motor for a spindle in a numerically controlled machine tool.

**Claims**

1. An AC motor control apparatus for causing an actual velocity (TSA) of an AC motor (1) to follow up a commanded velocity (CV), comprising first digital arithmetic means (3) for calculating an amplitude command ($I_d$) based on a difference between the commanded velocity (CV) and the actual velocity (TSA) of the AC motor (1) and for delivering said amplitude command ($I_d$) and a current command ($I_{ud}$, $I_{vd}$) in at least one phase as outputs, a current sensing circuit (12a, 12r, 12s) for sensing actual phase currents ($I_{av}$, $I_{au}$), means for calculating a pulse width modulated signal in each phase from the current command and the actual phase current of the AC motor, and an inverter (8) for driving said AC motor in accordance with the pulse width modulated signals, characterised by having an analog/digital conversion circuit (12b, d) for subjecting the actual phase currents of said AC motor to an analog-to-digital conversion, second digital arithmetic means (10) connected to said first arithmetic means (3) by a bus for calculating a pulse width command in each phase in dependence upon amplitude and phase commands supplied by said first arithmetic means (3) and upon the actual phase currents of the AC motor, and a timer (11) for producing as an output a pulsewidth modulated signal in each phase on the basis of the pulse width command supplied by said second arithmetic means (10), said second arithmetic means (10) being arranged for calculating ON time in the inverter (8) in each phase dependent upon a comparison between a reference triangular signal (STS) corresponding to a level to be modulated and a phase AC signal (iu, iv, iw) corresponding to a level of a respective phase control signal, and for calculating OFF time from the start of said reference triangular signal (TRS) based on the period of said reference triangular signal (TRS) and said ON time, the timer (11) comprising in each phase first counter means (11a) set to said OFF time for counting said set OFF time, and second counter means (11b) set to said ON time for counting said set ON time after said OFF time is counted, thereby to produce as an output said pulse-width modulated signal in each phase.

2. An AC motor control apparatus according to claim 1, characterised in that a bus control circuit (13) is provided between said first arithmetic means (3) and said second arithmetic means (10) operable to sever a bus on the side of said first arithmetic means (3) from a bus on the side of said second arithmetic means (10), said analog/digital conversion circuit (12b, d) being connected to the bus on the side of said second arithmetic means (10) to enable the second arithmetic means (10) to read-in the actual phase currents from said analog/digital conversion circuit.

3. An AC motor control apparatus according to claim 2, characterised in that said bus control circuit (13) is operable to sever the bus on the side of said first arithmetic means (3) from the bus on the side of said second arithmetic means (10) in response to a control signal from said second arithmetic means (10).

4. An AC motor control apparatus according to any preceding claim, characterised by having a dead zone generating circuit (14a, b, c) for applying a dead zone to the pulse-width modulated signals of said timer (11) to produce inverter drive signals for said inverter (8), said dead zone generating circuit (14a, b, c) including integrating circuitry (R1C1, R2C2) for integrating said pulse-width modulated signals, and hysteresis circuitry (HT1, HT2) having different slice levels with respect to an output from said integrating circuitry, the slice level at rise time being different from the slice level at decay time.

5. An AC motor control apparatus according to claim 4, characterised in that said dead zone generating circuit 14a, b, c) has a pair of said integrating circuits (R1C1, R2C2) and a pair of said hysteresis circuits (HT1, HT2), the pulse-width modulated signals of said timer (11) entering one of the integrating circuits (R2C2) without inversion and entering the other of the integrating circuits (R1C1) following inversion.

6. An AC motor control apparatus according to claim 5, characterised in that each integrating circuit (R1C1, R2C2) is provided with a gate circuit (AND1, AND2) at an input stage thereof, and in that an output of each hysteresis circuit (HT1, HT2) serves as a control input of the gate circuit of the other hysteresis circuit.

7. An AC motor control apparatus according to any preceding claim, characterised in that said current sensing circuit (12a) is equipped with a current sensor for sensing currents in at least two phases, an analog switch (SWU, SWV) provided for each of said phases in which current is sensed, and a changeover circuit (FF) for changing over said analog switches (SWU, SWV) in response to a control signal from said second arithmetic means (10), said sensed currents being successively applied to an analog/digital converter (12b) via said analog switches (SWU, SWV).

8. An AC motor control apparatus according to claim 7, characterised in that the current sensor of said current sensing circuit (12a) is each constituted by a resistor (9a, 9b).

## Patentansprüche

1. Regelvorrichtung eines Wechselstrommotors zum Regeln einer Ist-Drehzahl (TSA) des Wechselstrommotors (1) derart, daß sie einer Soll-Drehzahl (CV) folgt, mit einer ersten digitalen arithmetischen Einrichtung (3) zum Berechnen eines Amplituden-Befehls ($I_d$) auf der Grundlage einer Differenz zwischen der Soll-Drehzahl (CV) und der Ist-Drehzahl (TSA) des Wechselstrommotors (1) und zum Ausgeben des Amplituden-Befehls ($I_d$) und eines Strom-Befehls ($I_{ud}$, $I_{vd}$) in zumindest einer Phase als Ausgangssignale, einer Strom-Erfassungsschaltung (12a, 12r, 12s) zum Erfassen von Ist-Phasenströmen ($I_{av}$, $I_{au}$), Mitteln zum Berechnen eines impulsbreitenmodulierten Signals in jeder Phase aus dem Strom-Befehl und dem Ist-Phasenstrom des Wechselstrommotors und einem Wechselrichter (8) zum Treiben des Wechselstrommotors in Übereinstimmung mit den impulsbreitenmodulierten Signalen, gekennzeichnet durch eine Analog/Digital-Wandlerschaltung (12b, d), mittels derer die Ist-Phasenströme des Wechselstrommotors einer Analog/Digital-Wandlung unterzogen werden, eine zweite digitale arithmetische Einrichtung (10), die mit der ersten arithmetischen Einrichtung (3) durch eine Busleitung zum Berechnen eines Impulsbreiten-Befehls in jeder Phase in Abhängigkeit von den Amplituden- und Phasen-Befehlen, die durch die erste arithmetische Einrichtung (3) bereitgestellt werden, und von den Ist-Phasenströmen des Wechselstrommotors verbunden ist, und eine Zeitgebereinrichtung (11) zum Erzeugen eines impulsbreitenmodulierten Signals in jeder Phase auf der Grundlage des Impulsbreiten-Befehls, der durch die zweite arithmetische Einrichtung (10) bereitgestellt wird, als ein Ausgangssignal wobei die zweite arithmetische Einrichtung (10) zum Berechnen der EIN-Zeit in dem Wechselrichter (8) in jeder Phase abhängig von einem Vergleich zwischen einem Referenz-Dreieckimpulssignal (TRS), das mit einem Pegel korrespondiert, der zu modulieren ist, und einem Phasen-Wechselstromsignal (iu, iv, iw), das mit einem betreffenden Phasenregelsignal korrespondiert, und zum Berechnen der AUS-Zeit von dem Beginn des Referenz-Dreieckimpulssignals (TRS) an auf der Grundlage der Periode des Referenz-Dreieckimpulssignals (TRS) und der EIN-Zeit, wobei die Zeitgebereinrichtung (11) in jeder Phase aus einem ersten Zählmittel (11a), das auf die AUS-Zeit zum Abzählen der eingestellten AUS-Zeit gesetzt wird, und einem zweiten Zahlmittel (11b) besteht, das auf die EIN-Zeit zum Abzählen der eingestellten EIN-Zeit, nachdem die AUS-Zeit abgezählt ist, gesetzt wird, um dadurch als Ausgangssignal das impulsbreitenmodulierte Signal in jeder Phase zu erzeugen.

2. Regelvorrichtung eines Wechselstrommotors nach Anspruch 1, dadurch gekennzeichnet, daß eine Busleitungs-Steuerschaltung (13) zwischen der ersten arithmetischen Einrichtung (3) und der zweiten arithmetischen Einrichtung (10) vorgesehen ist, die betreibbar ist, um eine Busleitung auf der Seite der ersten arithmetischen Einrichtung (3) von einer Busleitung auf der Seite der zweiten arithmetischen Einrichtung (10) abzutrennen, wobei die Analog/Digital-Wandlerschaltung (12b, d) mit der Busleitung auf der Seite der zweiten arithmetischen Einrichtung (10) verbunden ist, um die zweite arithmetische Einrichtung (10) in die Lage zu versetzen, die Ist-Phasenströme aus der Analog/Digital-Wandlerschaltung einzulesen.

3. Regelvorrichtung eines Wechselstrommotors nach Anspruch 2, dadurch gekennzeichnet, daß die Busleitungs-Steuerschaltung (13) derart betreibbar ist, daß sie die Busleitung auf der Seite der ersten arithmetischen Einrichtung (3) von der Busleitung auf der Seite der zweiten arithmetischen Einrichtung (10) in Reaktion auf ein Steuersignal aus der zweiten arithmetischen Einrichtung (10) abtrennt.

4. Regelvorrichtung eines Wechselstrommotors nach einem der vorhergehenden Ansprüche, gekennzeichnet durch eine Totzonen-Erzeugungsschaltung (14a, b, c) zum Anwenden einer Totzone auf die impulsbreitenmodulierten Signale der Zeitgeberschaltung (11), um Wechselrichter-Treibersignale für den Wechselrichter (8) zu erzeugen, wobei die Totzonen-Erzeugungsschaltung (14a, b, c) eine integrierende Schaltungsanordnung (R1C1, R2C2) zum Integrieren der impulsbreitenmodulierten Signale und eine Hysteresis-Schaltungsanordnung (HT1, HT2) enthält, die unterschiedliche Schnitthöhen in bezug auf ein Ausgangssignal aus der integrierenden Schaltungsanordnung aufweist, wobei die Schnitthöhe bei der Anstiegszeit unterschiedlich von der Schnitthöhe bei der Abfallzeit ist.

5. Regelvorrichtung eines Wechselstrommotors nach Anspruch 4, dadurch gekennzeichnet, daß die Totzonen-Erzeugungsschaltung (14a, b, c) ein Paar der integrierenden Schaltungsanordnungen (R1C1, R2C2) und ein Paar der Hysteresis-Schaltungsanordnungen (HT1, HT2) aufweist und daß die impulsbreitenmodulierten Signale der Zeitgeberschaltung (11) in eine der intergrierenden Schaltungsanordnungen (R2C2) ohne Inversion und in die andere der integrierenden Schaltungsanordnungen (R1C1) nach einer Inversion eintreten.

6. Regelvorrichtung eines Wechselstrommotors nach Anspruch 5, dadurch gekennzeichnet, daß jede integrierende Schaltungsanordnung (R1C1, R2C2) mit einer Gatterschaltung (AND1, AND2) an jeder Eingangsstufe derselben versehen ist und daß ein Ausgangssignal jeder Hysteresis-Schaltungsanordnung (HT1, HT2) als ein Steuereingangssignal der Gatterschaltung der anderen Hysteresisschaltung dient.

7. Regelvorrichtung eines Wechselstrommotors nach einem der vorhergehenden Ansprüche, dadurch gekennzeichnet, daß die Strom-Erfassungsschaltung (12a) mit einem Strom-Sensor zum Erfassen der Ströme in zumindest zwei Phasen, einem analogen Schalter (SWU, SWV), der für jede der Phasen vorgesehen ist, in denen der Strom erfaßt wird, und einer Umschalt-Einrichtung (FF) zum Umschalten der analogen Schalter (SWU, SWV) in Reaktion auf ein Steuersignal aus der zweiten arithmetischen Einrichtung (10) ausgestattet ist und daß die erfaßten Ströme aufeinanderfolgend einem Analog/Digital-Wandler (12b) über die analogen Schalter (SWU, SWV) zugeführt werden.

8. Regelvorrichtung eines Wechselstrommotors nach Anspruch 7, dadurch gekennzeichnet, daß der Strom-Sensor der Strom-Erfassungsschaltung (12a) jeweils durch einen Widerstand (9a, 9b) gebildet ist.

**Revendications**

1. Un appareil de commande de moteur à courant alternatif pour faire en sorte qu'une vitesse effective (TSA) d'un moteur à courant alternatif (1) suive une vitesse commandée (CV), comprenant des premiers moyens arithmétiques numériques (3) pour calculer une commande d'amplitude (Id) basée sur une différence entre la vitesse commandée (CV) et la vitesse effective (TSA) du moteur à courant alternatif (1) et pour fournir cette commande d'amplitude (Id) et une commande de courant (Iud, Ivd) dans au moins une phase comme sorties, une circuit détecteur de courant (12a, 12r, 12s) pour détecter des courants effectifs de phase (Iav, Iau) des moyens pour calculer un signal modulé en largeur d'impulsion dans chaque phase en partant de la commande de courant et du courant effectif de phase du moteur à courant alternatif, et un inverseur (8) pour exciter le moteur à courant alternatif conformément aux signaux modulés en largeur d'impulsion,

caractérisé en ce qu'il comporte un circuit de conversion analogique/numérique (12b, d) pour soumettre les courants effectifs de phase du moteur à courant alternatif à une conversion analogique/numérique, des deuxièmes moyens arithmétiques numériques (10) reliés aux premiers moyens arithmétiques (3) par un bus pour calculer une commande de largeur d'impulsion dans chaque phase sous la dépendance de commandes d'amplitude et de phase fournies par les premiers moyens arithmétiques (3) et des courants effectifs de phase du moteur à courant alternatif, et un rythmeur (11) pour engendrer comme sortie un signal modulé en largeur d'impulsion dans chaque phase sur la base de la commande de largeur d'impulsion fournie par les deuxièmes moyens arithmétiques (10), les deuxièmes moyens arithmétiques (10) étant conçus pour calculer un temps de fermeture dans l'inverseur (8), dans chaque phase sous la dépendance d'une comparaison entre un signal triangulaire de référence (STS) correspondant à un niveau à moduler et un signal de courant alternatif de phase (iu, iv, iw) correspondant à un niveau d'un signal respectif de commande de phase, et pour calculer un temps d'ouverture depuis le démarrage du signal triangulaire de référence (TRS), sur la base de la période du signal triangulaire de référence (TRS) et du temps de fermeture, le rythmeur (11) comprenant dans chaque phase de premiers moyens de comptage (11a) réglés au temps d'ouverture pour compter ce temps d'ouverture réglé, et des deuxièmes moyens de comptage (11b) réglés au temps de fermeture pour compter ce temps de fermeture réglé une fois qui le temps d'ouverture a été compté, de manière à engendrer comme sortie le signal modulé en largeur d'impulsion dans chaque phase.

2. Un appareil de commande de moteur à courant alternatif selon la revendication 1, caractérisé en ce qu'un circuit de commande de bus (13) est prévu entre les premiers moyens arithmétiques (3) et les deuxièmes moyens arithmétiques (10) et capable de séparer un bus du côté des premiers moyens arithmétiques (3) d'un bus du côté des deuxièmes moyens arithmétiques (10), le circuit de conversion analogique/ numérique (12b, d) étant relié au bus du côté des deuxièmes moyens arithmétiques (10) pour permettre aux deuxièmes moyens arithmétiques (10) d'enregistrer les courants effectifs de phase venant du circuit de conversion analogique/ numérique.

3. Un appareil de commande de moteur à courant alternatif selon la revendication 2, caractérisé en ce que le circuit de commande de bus (13) est capable de séparer le bus du côté des premiers moyens arithmétiques (3) du bus du côté des deuxièmes moyens arithmétiques (10) en réponse à un signal de commande venant des deuxièmes moyens arithmétiques (10).

4. Un appareil de commande de moteur à courant alternatif selon l'une quelconque des revendications précédentes, caractérisé en ce qu'il a un circuit générateur de zone morte (14a, b, c) pour appliquer une zone morte aux signaux modulés en largeur d'impulsion du rythmeur (11) pour engendrer des signaux d'excitation pour l'inverseur (8), le circuit générateur de zone morte (14a, b, c) comprenant des circuits intégrateurs (R1C1, R2C2) pour intégrer les signaux modulés en largeur d'impulsion et des circuits d'hystérésis (HT1, HT2) ayant différents niveaux de tranche par rapport à une sortie venant des circuits intégrateurs, le niveau de tranche au moment de montée étant différent du niveau de tranche au moment d'affaiblissement.

5. Un appareil de commande de moteur à courant alternatif selon la revendication 4, caractérisé en ce que le circuit générateur de zone morte (14a, b, c) a une paire de circuits intégrateurs (R1C1, R2C2) et une paire de circuits d'hystérésis (HT1, HT2), les signaux modulés en largeur d'impulsion du rythmeur (11) entrant dans l'un des circuits intégrateurs (R2C2) sans inversion et entrant dans l'autre des circuits intégrateurs (R1C1) après inversion.

6. Un appareil de commande de moteur à courant alternatif selon la revendication 5, caractérisé en ce que chaque circuit intégrateur (R1C1, R2C2) est muni d'un circuit de porte (AND1, AND2) à un stade d'entrée de celui-ci et qu'une sortie de chaque circuit d'hystérésis (HT1, HT2) sert d'entrée de commande du circuit de porte de l'autre circuit d'hystérésis.

7. Un appareil de commande de moteur à courant alternatif selon l'une quelconque des revendications précédentes, caractérisé en ce que le circuit détecteur de courant (12a) est équipé d'un détecteur de courant pour détecter des courants dans au moins deux phases, d'un commutateur analogique (SWU, SWV) prévu pour chacune des phases dans lesquelles du courant est détecté, et d'un circuit de commutation (FF) pour commuter les commutateurs analogique (SWU, SWV) en réponse à un signal de commande venant des deuxièmes moyens arithmétiques (10), ces courants détectés étant appliqués successivement à un convertisseur analogique/ numérique (12b) par l'intermédiaire des commutateurs analogiques (SWU, SWV).

8. Un appareil de commande de moteur à courant alternatif selon la revendication 7, caractérisé en ce que le détecteur de courant du circuit détecteur de courant (12a) est chaque fois constitué par une résistance (9a, 9b).

# Fig. 1

PROCESSOR — 30

3

PROGRAM MEMORY — 31

DATA MEMORY — 32

33 — INPUT/OUTPUT PORT

34 — INPUT/OUTPUT PORT

36

35 — COUNTER

COMMAND VELOCITY CV

Id

4a — D/A — Is

4b — D/A

Iud

Ivd

4c — D/A

5

Iu
Iv
Iw
Iaw

6 — ARITHMETIC OPERATION AMPLIFIER

iu
iv
iw

THREE-PHASE AC POWER SUPPLY

7 — PWM

8 — INVERTER

Iav
Iau

9r   9s

I — M

RV

2

TSA

Iaw SENSING CIRCUIT

0 124 619

# Fig. 2

# Fig. 3

0 124 619

# Fig. 4

THREE PHASE
AC POWER
SUPPLY

M

A/D

COUNTER

DATA
MEMORY

PROGRAM
MEMORY

INPUT/
OUTPUT
PORT

PROCESSOR

COMMAND
VELOCITY
CV

3

# Fig. 5

# Fig. 6

# Fig. 7

0 124 619

# Fig. 8

0 124 619

# Fig. 9

# Fig. 10

# Fig. 11

# Fig. 12

# Fig. 13

# Fig. 14

```
                    ( START )
                        │
                        ▼
┌─────────────────────────────────────────────────┐
│ READ IN PRIMARY CURRENT AMPLITUDE COMMAND    Id  │
│ READ IN PRIMARY CURRENT PHASE COMMAND        θud │
│ READ IN EXCITATION FREQUENCY                 ωt  │
└─────────────────────────────────────────────────┘
```

(a) 

$$\text{READ IN PRIMARY CURRENT AMPLITUDE COMMAND} \quad Id$$
$$\text{READ IN PRIMARY CURRENT PHASE COMMAND} \quad \theta ud$$
$$\text{READ IN EXCITATION FREQUENCY} \quad \omega t$$

(b) CALCULATE $\theta = \omega t + \theta ud$

(c) READ IN SINE WAVE FROM DATA MEMORY 32
U PHASE $\quad Iud = \sin \theta$
V PHASE $\quad Ivd = \sin ( \theta + 120°)$
W PHASE $\quad Iwd = \sin ( \theta + 240°)$

(d) MULTIPLY BY CURRENT COMMAND
U PHASE $\quad Iu = Iud \times \sin \theta$
V PHASE $\quad Iv = Ivd \times \sin ( \theta + 120°)$
W PHASE $\quad Iw = Iwd \times \sin ( \theta + 240°)$

(e) READ IN ACTUAL PHASE CURRENTS $Iau, Iav$ FROM AD CONVERTER 12d
CALCULATE $\quad Iaw = -( Iau + Iav )$

(f) OBTAIN iu, iv, iw AND PROPORTIONALLY INTEGRATE THEM

(g) PULSE WIDTH COMMAND
$T_3 = ( T_1 - T_2 ) / 2$

(h) APPLY TO TIMERS 11a, 11b

( END )